(19) Europäisches Patentamt
European Patent Office
Office européen des brevets

(11) **EP 1 892 886 A1**

(12) **EUROPÄISCHE PATENTANMELDUNG**

(43) Veröffentlichungstag:
**27.02.2008 Patentblatt 2008/09**

(51) Int Cl.:
***H04L 12/28*** (2006.01)

(21) Anmeldenummer: **06017580.9**

(22) Anmeldetag: **23.08.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Nokia Siemens Networks GmbH & Co. KG**
**81541 München (DE)**

(72) Erfinder:
• **Lunter, Pavol**
**85101 Bratislava (SK)**
• **Ulrich, Thomas**
**67098 Bad Dürkheim (DE)**
• **Wolf, Martin**
**03301 Liptovsky Hradok (SK)**

(54) **Verfahren zur Steuerung einer Lastanpassung in einem Funk-Kommunikationssystem**

(57) Die Erfindung betrifft insbesondere ein Verfahren zur Steuerung einer Übertragung von Datenpaketen in einem Funk-Kommunikationssystem, wobei das Funk-Kommunikationssystem zumindest einen zentralen Knoten (aGW) sowie zumindest eine mit diesem verbundene Basisstation (eNB) aufweist, und wobei die Basisstation (eNB) von dem zentralen Knoten (aGW) empfangene und von diesem mit einer Verschlüsselung versehene Datenpakete zu zumindest einem Teilnehmerendgerät (UE) über eine Funkschnittstelle (Radio Interface) überträgt, bei dem die Basisstation (eNB) abhängig von einem aktuellen oder erwarteten Lastzustand eine erste Anzahl von Datenpaketen vor einer Übertragung über die Funkschnittstelle (Radio Interface) verwirft. Das Verfahren ist dadurch gekennzeichnet, dass einer zweiten Anzahl der zu dem Teilnehmerendgerät (UE) zu übertragenden Datenpakete in dem zentralen Knoten (aGW) nach der Verschlüsselung eine jeweilige erste Information (DE) hinzugefügt wird, und die Basisstation (eNB) abhängig von der ersten Information (DE) ein jeweiliges Datenpaket verwirft oder nicht.

FIG 1

EP 1 892 886 A1

**EP 1 892 886 A1**

**Beschreibung**

Die Erfindung bezieht sich auf ein Verfahren zur Steuerung einer Lastanpassung in einem Funk-Kommunikationssystem, insbesondere in einem Mobilfunksystem nach einer Weiterentwicklung des UMTS-Standards.

Allgemein bekannt sind Mobilfunksysteme auf Basis beispielsweise des Standards GSM (Global System for Mobile Communications) oder des Standards UMTS (Universal Mobile Telecommunication System), deren Weiterentwicklungen von der so genannten 3GPP (3rd Generation Partnership Project) standardisiert werden. Als Weiterentwicklung des UMTS-Systems wird derzeit an der Standardisierung des so genannten UMTS-LTE (LTE: Long Term Evolution / Langzeitentwicklung) bzw. Evolved-UTRA (UTRA: Universal Terrestrial Radio Access / universeller terrestrischer Funkzugriff) gearbeitet. Einige der wichtigen Aspekte einer solchen Langzeitentwicklung umfassen eine reduzierte Latenz, höhere Teilnehmer-Datenraten, verbesserte Systemkapazität und Systemabdeckung und reduzierte Kosten für den Betreiber des Systems.

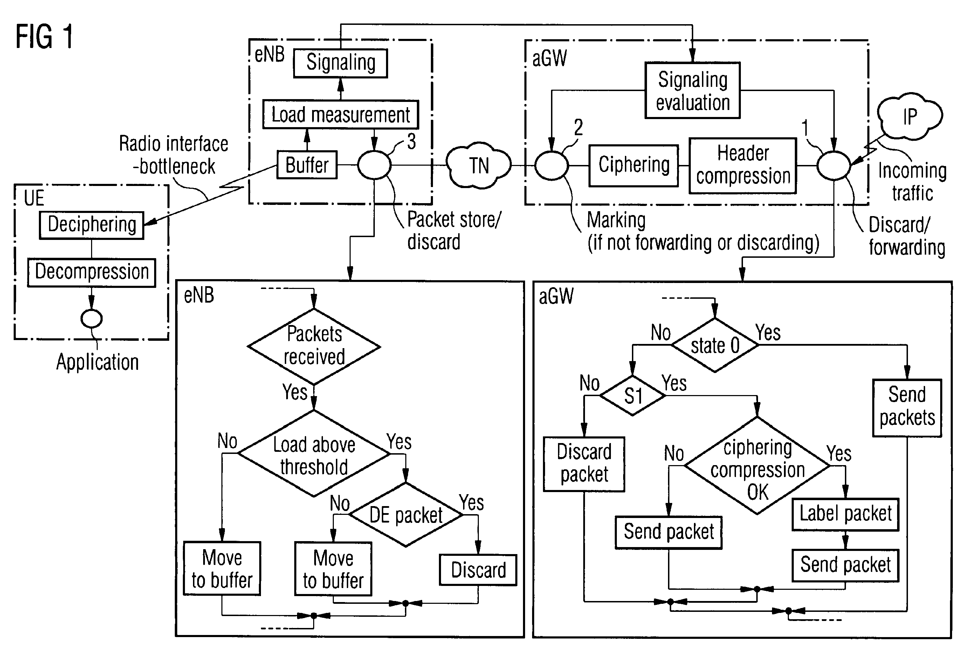

Im Zuge dieser Weiterentwicklung des UMTS-Standards wird auch die Struktur des so genannten Funkzugangsnetzes RAN (Radio Access Network) mit dem Ziel einer größeren Flexibilität und verringerter Latenz verändert. Basisstationen, welche als NodeB bzw. NB sowie in der Nomenklatur der UMTS-LTE als eNB bezeichnet werden, sind im Unterschied zu dem aktuellen UMTS-Standard für eine Verwaltung und Zuweisung von Funkressourcen auf der Funkschnittstelle (Radio Interface) zu Teilnehmerendgeräten UE (User Equipment) verantwortlich. Diese Funktion wurde vormals von der so genannten Funknetzsteuerung RNC (Radio Network Controller) wahrgenommen, welcher nunmehr als eigenständige Komponente des RAN nicht mehr existiert. Andere Funktionalitäten der Funknetzsteuerung werden hingegen von einer neuen Komponente, dem so genannten Zugangsnetzübergang aGW (Access Gateway), wahrgenommen. Basisstationen eNB und Zugangsnetzübergang aGW sind über ein Transportnetzwerk TN miteinander verbunden, auf welchem Übertragungen nach beispielsweise dem IP (Internet Protocol) erfolgen. Der Zugangsnetzübergang aGW wiederum ist mit einem wiederum IP-basierten Kernnetz verbunden. Diese Struktur des Funkzugangssystems ist beispielhaft in der FIG 1 dargestellt.

Ziel der Weiterentwicklung des UMTS-Standards ist zudem eine weitestgehende Vermeidung von Blockierungssituationen in den einzelnen Netzwerkkomponenten. Aufgrund der besonderen Eigenschaften der Funkschnittstelle, insbesondere die von Parametern wie Zeit, Ort, Geschwindigkeit von Teilnehmerendgeräten, Lastsituation in Funkzellen von Nachbarbasisstationen etc., abhängigen Übertragungseigenschaften von Signalen über die Funkschnittstelle, können jedoch weiterhin Blockierungssituationen in der Basisstation auftreten. Dies kann beispielsweise ein Überlauf eines Pufferspeichers in der Basisstation sein, der einer bestimmten Verbindung bzw. einem bestimmten Teilnehmerendgerät zugeordnet ist, aufgrund beispielsweise einer nicht ausreichenden Anzahl für die Übertragung von Daten auf dieser Verbindung zur Verfügung stehender Funkressourcen oder aber einer erforderlichen wiederholten Übertragung von Daten nach beispielsweise einem ARQ-Protokoll (Automatic Repeat Request). Der Pufferspeicher dient dabei dazu, Daten bis zu ihrer Übertragung über die Funkschnittstelle zwischenzuspeichern.

In solchen Situationen eines bevorstehenden oder bereits existierenden Überlaufs des einer Verbindung zugeordneten Pufferspeichers würde nach der derzeit vorgesehenen Herangehensweise die Basisstation bereits im Pufferspeicher befindliche oder neu von dem aGW eintreffende Datenpakete solange verwerfen, bis die Überlastsituation nicht mehr gegeben ist. Hierbei bleibt jedoch nachteilig die Tatsache unberücksichtigt, dass die Basisstation in der Regel keinerlei Kenntnis des Inhalts des Datenpakets bzw. dessen Wichtigkeit hat, da Datenpakete zwischen aGW und Teilnehmerendgerät verschlüsselt (engl. ciphering) und einer so genannten Kopfkomprimierung (engl. header compression), beispielsweise nach dem so genannten ROHC (Robust Header Compression) versehen werden. Die Basisstation, welche die verschlüsselten und komprimierten Datenpakete nicht entschlüsseln kann, wird somit potenziell auch Datenpakete verwerfen (engl. discard), welche für eine zuverlässige Entschlüsselung sowie Rückwandlung der Daten in dem Teilnehmerendgerät erforderlich sind. Dies kann nachteilig zu für den Teilnehmer deutlich vernehmbaren Beeinträchtigungen der Verbindungsqualität sowie gegebenenfalls zu einem Abbruch der Verbindung führen. Insbesondere kann es dabei zu einem Verbindungsabbruch kommen, wenn die Verschlüsselungsmechanismen in dem aGW und dem Teilnehmerendgerät nicht mehr synchron sind und auch seitens des Teilnehmerendgerätes keine Möglichkeiten mehr bestehen, diese Synchronität wiederherzustellen.

Zur Vermeidung derartiger Situationen kann beispielsweise die Verantwortung für eine Vermeidung von Überlastsituationen von derzeit allein der Basisstation auf den aGW erweitert werden. Dies würde eine Abstimmung zwischen der Basisstation und dem aGW erfordern, welcher bei einem Überlauf des Pufferspeichers in der Basisstation beispielsweise solange keine weiteren von anderen Systemkomponenten empfangene Datenpakete der Verbindung zu der Basisstation senden würde, bis die Überlastsituation dort beseitigt ist. Eine Speicherung solcher Datenpakete in dem aGW wäre entsprechend erforderlich. Dieser Lösung steht jedoch entgegen, dass nach derzeitigen Vorstellungen der aGW nicht mit Pufferspeichern ausgerüstet werden soll, und somit nicht zur ergänzenden Zwischenspeicherung von Datenpaketen ausgerüstet ist.

Es ist daher eine Aufgabe der Erfindung, ein Verfahren sowie Komponenten eines Funk-Kommunikationssystems anzugeben, welche eine effiziente Vermeidung von durch ein Verwerfen von Datenpaketen auftretenden kritischen Situationen unter Berücksichtigung der vorstehend beschriebenen Systemstruktur ermöglichen. Diese Aufgabe wird durch die Merkmale der unabhängigen Patentansprüche gelöst. Vorteilhafte Weiterbildungen der Erfindung sind abhängigen Patentansprüchen entnehmbar.

Nach dem erfindungsgemäßen Verfahren in einem Funk-Kommunikationssystem, welches zumindest einen zentralen Knoten sowie zumindest eine mit diesem verbundene Basisstation aufweist, werden von der Basisstation von dem zentralen Knoten empfangene verschlüsselte Datenpakete zu zumindest einem Teilnehmerendgerät über eine Funkschnittstelle übertragen, wobei von der Basisstation abhängig von einem aktuellen oder erwarteten Lastzustand eine erste Anzahl von Datenpaketen vor einer Übertragung über die Funkschnittstelle verworfen wird. Kennzeichnend fügt der zentrale Knoten einer zweiten Anzahl der nach einer Verschlüsselung zu dem Teilnehmerendgerät zu übertragenden Datenpakete eine jeweilige erste Information hinzu. Diese erste Information berücksichtig die Basisstation für eine Entscheidung darüber, ob ein jeweiliges Datenpaket verworfen wird oder nicht.

Vorteilhaft wird hierdurch sichergestellt, dass von der Basisstation bei einer einleitend beschriebenen Überlast nur verschlüsselte Datenpakete verwirft, welche für die Aufrechterhaltung der Verbindung ohne bzw. von geringer Bedeutung sind. Da der zentrale Knoten in Kenntnis des jeweiligen Inhalts der Datenpakete ist, da dieser vor der Verschlüsselung zur Übertragung zu dem Teilnehmerendgerät frei zugänglich ist, kann er eine jeweilige Relevanz der Datenpakete für die Verbindung bestimmen und entsprechend die erste Information hinzufügen. Im Gegensatz zu dem verschlüsselten Inhalt der Datenpakete kann die ergänzte erste Information von der Basisstation ausgewertet werden und der Entscheidung darüber, ob ein Datenpaket im beispielhaften Fall einer Überlast verworfen wird oder nicht, zugrunde gelegt werden. Vorzugsweise wird die zweite Anzahl der von dem zentralen Knoten mit der ersten Information versehenen Datenpakete größer der letztlich von der Basisstation verworfene ersten Anzahl Datenpakete gewählt. Hierdurch kann die Basisstation der jeweiligen Lastsituation angepasst individuell Datenpakete verwerfen.

Die der zweiten Anzahl Datenpakete hinzugefügte erste Information kann beispielsweise ein Statusbit (engl. Flag) in dem Kopffeld (engl. Header) einer so genannten Paketdateneinheit (PDU - Packet Data Unit) sein, welche das verschlüsselte Datenpaket trägt.

Gemäß einer Weiterbildung der Erfindung wird die erste Information nur zu verschlüsselten Datenpaketen hinzugefügt, welche nachfolgend seitens der Basisstation verworfen werden können. Dies kann beispielsweise derart umgesetzt werden, dass das Statusbit nur gesetzt und mit zu der Basisstation übertragen wird, wenn es eine Verwerfbarkeit des Datenpakets anzeigt. Als eine alternative Ausgestaltung zu einem Hinzufügen eines Statusbits zu allen Datenpaketen und einer Unterscheidung nach dem Status des Bits (beispielsweise einem binären Wert, wobei 0 für nicht verwerfbar und 1 für verwerfbar steht) wird hierdurch vorteilhaft die Signalisierungslast auf der Schnittstelle zwischen zentralem Knoten und der Basisstation verringert.

Gemäß einer weiteren Weiterbildung der Erfindung signalisiert die Basisstation dem zentralen Knoten eine zweite Information über den aktuellen oder erwarteten Lastzustand. Mittels dieser zweiten Information, welche vorzugsweise periodisch oder abhängig von bestimmten Gegebenheiten, beispielsweise ein Überschreiten von einem oder mehreren Schwellwerten als Maß für den Füllstand des Pufferspeichers in der Basisstation, zu dem zentralen Knoten signalisiert wird, ist der zentrale Knoten vorteilhaft in Kenntnis des Lastzustandes der Basisstation.

Nach einer darauf basierenden weiteren Weiterbildung der Erfindung steuert der zentrale Knoten abhängig von der empfangenen zweiten Information das Hinzufügen der ersten Information zu den verschlüsselten Datenpaketen. Dies kann beispielsweise derart erfolgen, dass die Anzahl der Datenpakete, welche mit einem ein mögliches Verwerfen anzeigenden Statusbit versehen werden, der aktuellen Überlastsituation angepasst wird, d.h. es werden von dem zentralen Knoten mindestens so viele Datenpakete mit einem solchen Statusbit versehen (sofern möglich), dass die Überlast des Pufferspeichers in der Basisstation innerhalb eines bestimmten Zeitraumes von der Basisstation abgebaut werden kann.

Nach einer weiteren darauf basierenden Weiterbildung verwirft der zentrale Knoten ergänzend eine dritte Anzahl Datenpakete bereits vor der Übertragung zu der Basisstation. Dies ist insbesondere vorteilhaft, wenn der zentrale Knoten aufgrund der Signalisierung der Lastsituation, sowie ergänzend in Kenntnis beispielsweise der Rate, mit der neue Datenpakete empfangen werden, bereits die Anzahl der von der Basisstation zu verwerfenden Datenpakete abschätzen kann. In diesem Fall kann mittels des Verwerfens einer bestimmten dritten Anzahl von Datenpaketen durch den zentralen Knoten die Belastung der Basisstation verringert werden, wobei es weiterhin der Basisstation obliegt, eine entsprechende erste Anzahl Datenpakete zur Verringerung der Überlast zu verwerfen.

Nach einer weiteren darauf basierenden Weiterbildung wählt der zentrale Knoten ein Verhältnis der dritten Anzahl zu der zweiten Anzahl Datenpakete abhängig von der signalisierten zweiten Information. Hierdurch kann sich der zentrale Knoten, wie vorstehend beschrieben, optimal der Lastsituation in der Basisstation anpassen.

Ein erfindungsgemäßes Funk-Kommunikationssystem sowie Komponenten eines solchen Systems weisen jeweils Mittel auf, mit denen die erfindungsgemäßen Verfahrensmerkmale verwirklicht werden können.

Die Erfindung wird nachfolgend anhand eines Ausführungsbeispiels näher dargestellt. Dabei zeigen

FIG 1     eine beispielhafte Struktur eines Funk-Kommunikationssystems einschließlich zweier Ablaufdiagramme,

FIG 2    ein Diagramm mit Statusübergängen in Komponenten des Funk-Kommunikationssystems,

FIG 3    ein beispielhaftes Zeitdiagramm des erfindungsgemäßen Verfahrens,

FIG 4    ein weiteres Diagramm mit Statusübergängen in Komponenten des Funk-Kommunikationssystems,

FIG 5    ein weiteres beispielhaftes Zeitdiagramm, und

FIG 6    Angaben der Bitraten auf den jeweiligen Schnittstellen zwischen den Komponenten des Funk-Kommunikationssystems.

In der FIG 1 ist die Struktur eines Funk-Kommunikationssystems, insbesondere nach dem aktuellen Stand der UMTS-LTE-Standardisierung, beispielhaft dargestellt. Ein so genannter Zugangsnetzübergang aGW (Access Gateway) steht mit weiteren Komponenten des Systems bzw. anderen Systemen über ein IP-basiertes Netzwerk in Verbindung. Aus diesem Netzwerk IP empfängt das aGW eingehenden Datenverkehr (Incoming traffic) in Form von Datenpaketen. Diese eingehenden Datenpakete werden in dem aGW weiter behandelt, wie es nachfolgend noch detailliert dargestellt wird. Das aGW ist weiterhin mit zumindest einer Basisstation eNB über ein Transportnetzwerk TN verbunden. Die beispielhaft dargestellt Basisstation eNB ist wiederum über eine Funkschnittstelle (Radio Interface), welche als die Datenrate begrenzende und daher kritische Instanz (bottleneck) betrachtet wird, mit einem Teilnehmerendgerät UE verbunden.

Es sei angenommen, dass zwischen einer nicht dargestellten Quelle von Datenpaketen, beispielsweise einem weiteren Teilnehmerendgerät oder einem Server, und dem dargestellten Teilnehmerendgerät UE eine Kommunikationsverbindung besteht, auf der zumindest Datenpakete zu dem dargestellten Teilnehmerendgerät UE übertragen werden. Diese Datenpakete dienen einer Anwendung (Application), beispielsweise eine so genannte Video-Streaming-Anwendung, in dem Teilnehmerendgerät UE.

Das aGW empfängt auf dieser Verbindung somit Datenpakete für das Teilnehmerendgerät UE, welches es zu der Basisstation eNB, in dessen Funkabdeckungsbereich bzw. Funkzelle sich das Teilnehmerendgerät UE aktuell befindet, weiterleitet. In dem aGW erfolgt nach einer Prüfung in einem ersten Schritt 1, welcher nachfolgend noch detailliert beschrieben wird, zunächst eine Komprimierung (Header compression) des Kopffeldes der Datenpakete bzw. der die Datenpakete transportierenden Paketdateneinheiten (PDU - Packet Data Unit) sowie eine Verschlüsselung (Ciphering) der Datenpakete. Diese Komprimierung sowie Verschlüsselung existiert zwischen dem aGW und dem Teilnehmerendgerät UE, entsprechend weist das Teilnehmerendgerät UE Mittel zum Entschlüsseln (Deciphering) und Dekomprimieren (Decompression) der empfangenen Datenpakete auf. Nach einem zweiten Schritt 2, welcher ebenfalls nachfolgend näher beschrieben wird, überträgt der aGW die Datenpakete über das Transportnetzwerk TN zu der Basisstation eNB. In der Basisstation eNB werden die komprimierten und verschlüsselten Datenpakete nach einem nachfolgend erläuterten dritten Schritt 3 in einem Pufferspeicher (Buffer) zwischengespeichert, bevor’ sie über die Funkschnittstelle (Radio Interface) in von der Basisstation eNB zugewiesenen Funkressourcen zu dem Teilnehmerendgerät UE übertragen werden. Der Pufferspeicher (Buffer) bzw. ein bestimmter Bereich eines zentralen Pufferspeichers in der Basisstation eNB wird der Verbindung zugeordnet und beispielsweise abhängig von der erwarteten Datenrate oder einer Dienstequalität dimensioniert.

Wie einleitend beschrieben, weist die die Datenpakete von dem aGW über das Transportnetzwerk TN empfangende Basisstation eNB somit keinerlei Einrichtungen oder Mittel zum Dekomprimieren und Entschlüsseln der Datenpakete auf, sodass sie auch nicht anhand des Inhalts der Datenpakete oder bestimmter, beispielsweise in dem komprimierten Kopffeld befindlicher, Parameter wie Angaben über Dienstqualitätsanforderungen o.ä. auf eine potenzielle Verwerfbarkeit der Datenpakete für den Fall einer Überlast schließen kann. Die Basisstation eNB würde daher mit nicht dargestellten Mitteln zur Vermeidung einer Überlast Datenpakete vor der Übertragung zu dem Teilnehmerendgerät UE bzw. bereits vor der Speicherung in dem Pufferspeicher verwerfen, mit den einleitend genannten nachteiligen Folgen beispielsweise eines Verbindungsabbruchs aufgrund eines Verwerfens von für die Aufrechterhaltung der Verbindung notwendiger Datenpakete.

Dieses Problem kann nach der Erfindung mittels zweier Verfahren gelöst werden, welche vorteilhaft sowohl alleine als auch in Kombination miteinander verwirklicht werden können.

Das erste erfindungsgemäße Verfahren betrifft die in FIG 1 dargestellten Schritte 2 und 3. Gemäß dem Schritt 2 werden in dem aGW nach der Komprimierung des Kopffeldes (Header compression) sowie der Verschlüsselung (Ciphering) die Datenpakete markiert (Marking). Da diese Markierung nach der Komprimierung und Verschlüsselung erfolgt, kann die Basisstation eNB diese Information auswerten. Das Markieren der Datenpakete erfolgt beispielsweise mittels eines Statusbits, welches die Verwerfbarkeit des jeweiligen Datenpakets anzeigt. Dieses Statusbit wird nachfolgend auch als Discard Eligibility (DE) Bit bezeichnet. Das Statusbit kann von dem aGW vorteilhaft gesetzt bzw. hinzugefügt werden, da das aGW auf den vollständigen Datensatz der Datenpakete zugreifen kann, und somit vorteilhaft in der Lage ist, eine Relevanz für die Aufrechterhaltung der Verbindung zu ermitteln bzw. abzuschätzen. Entsprechend zeigt das aGW der Basisstation eNB mit dem Statusbit an, welches Datenpaket von dieser verworfen werden kann, sofern ein Verwerfen aufgrund einer Überlast erforderlich ist. Bei binären Werten des Statusbits kann dabei eine binäre 0 für nicht verwerfbar und eine binäre 1 für verwerfbar stehen. Alternativ kann jedoch das Statusbit auch nur übertragen werden, wenn eine Verwerfbarkeit des Datenpakets gegeben ist. Hierdurch kann die Signalisierungslast auf der Schnittstelle zwischen aGW und Basisstation eNB vorteilhaft verringert werden.

In der Basisstation eNB erfolgt in dem dritten Schritt 3, wie in dem Ablaufdiagramm unterhalb der Basisstation eNB beispielhaft angegeben, nach Empfang eines Datenpakets von dem aGW eine Entscheidung darüber, ob das empfangene Datenpaket in dem Pufferspeicher (Buffer) zur Übertragung über die Funkschnittstelle gespeichert (Packet store) oder verworfen (discard) wird. Zu dieser Entscheidungsfindung in dem dritten Schritt 3 ist ergänzend ein Entscheidungsdiagramm angegeben. Nach einem Empfang eines oder mehrerer Datenpakete (Packets received) wird zunächst geprüft, ob eine aktuelle oder angesichts des bzw. der empfangenen Datenpakete erwartete Last (Load) des Pufferspeichers (Buffer), welche in der Basisstation eNB bestimmt wird (Load measurement), mit einem vorgegebenen Schwellwert (threshold) verglichen. Die Definition des Schwellwertes bzw. mehrerer Schwellwerte wird nachfolgend zu weitere Figuren noch näher erläutert. Übersteigt die aktuelle oder erwartete Last nicht (No) den Schwellwert, so wird das Datenpaket zu dem Pufferspeicher weitergeleitet (Move to buffer). Übersteigt (Yes) hingegen die Last bereits den Schwellwert, so wird nachfolgend geprüft, ob es sich um ein mit einem gesetzten Statusbit versehenes Datenpaket (DE packet) handelt. Ist dies nicht (No) der Fall, d.h. das Datenpaket darf nicht von der Basisstation eNB verworfen werden, so wird es wiederum zu dem Pufferspeicher weitergeleitet (Move to buffer). Handelt (Yes) es sich hingegen um ein mit dem Statusbit versehenes Datenpaket, so wird es von der Basisstation eNB verworfen (Discard), um die Überlast in dem Pufferspeicher zu verringern bzw. zu beseitigen.

Ergänzend zu diesen Mechanismen kann in der Basisstation eNB aus den Messungen der Last (Load measurement) des Pufferspeichers eine Signalisierung (Signaling) abgeleitet werden, welche zu dem aGW übertragen wird. Diese Signalisierung kann beispielsweise als ein so genannter Überlastindikator, nachfolgend als Buffer Overflow Prediction (BOP) Indicator bezeichnet, verwirklicht sein. Dieser Indikator (BOP) wird beispielsweise zu dem aGW signalisiert, wenn ein bestimmter Schwellwert des Pufferspeichers überschritten wurde, und somit eine potenzielle Überlast des Pufferspeichers absehbar ist. Bei der Festlegung des Schwellwertes sollte dabei berücksichtigt werden, dass Folgen der Signalisierung erst nach Ablauf eines bestimmten Zeitraumes für die Basisstation eNB spürbar werden. So kann der Schwellwert beispielsweise nach der folgenden Formel bestimmt werden:

$$\text{TL [Pakete]} \leq \text{TBS [Pakete]} - \text{TBR [Pakete/s]} * \text{RTT [s]},$$

mit

TL =     Schwellwert (Threshold Level)
TBS =    Gesamtgröße des Pufferspeichers (Total Buffer Size)
TBR =    Übertragungsbitrate, d.h. Rate der zwischen dem aGW und der Basisstation eNB übertragenen Daten (Transmitted Bit Rate)
RTT =    Zeit für Hin- und Rückübertragung (Round Trip Time), wobei RTT = 2 * OTT, mit
OTT =    einfache Übertragungszeit (One Trip Time), und
s =      Sekunde.

Der Schwellwert TL wird also derart bemessen, dass vor einem Wirksamwerden der Signalisierung nach dem Zeitraum RTT kein Überlauf des Pufferspeichers durch eine zu große Anzahl eintreffender Datenpakete auftreten kann.

Der Indikator wird vorzugsweise nur dann von der Basisstation eNB zu dem aGW signalisiert, wenn eine Überlastsituation besteht bzw. vorhersehbar ist. Hierdurch wird, insbesondere angesichts eine großen Anzahl in gleicher Weise parallel behandelter Verbindungen, die Signalisierungslast zwischen den beiden Komponenten vorteilhaft verringert. Alternativ kann jedoch in gleicher Weise eine periodische Signalisierung der Lastsituation erfolgen, sodass das aGW periodisch in Kenntnis der aktuellen Lastsituation in der Basisstation eNB ist, wobei in diesem Fall der Indikator beispielsweise mehrere Stati annehmen kann. Derartige Stati können beispielsweise Anzeiger für Überlast/keine Überlast und/oder Überschreiten/Unterschreiten des Schwellwertes x,y,z sein.

Nach Empfang und Auswertung (Signaling evaluation) des Indikators beginnt das aGW gemäß vorstehender Beschreibung im zweiten Schritt 2 mit der Markierung (Marking) von verschlüsselten Datenpaketen mittels Statusbits.

Alternativ oder ergänzend zu dem Markieren von potenziell verwerfbaren Datenpaketen in Schritt 2 kann seitens des aGW in dem Schritt 1 auch selbst ein Verwerfen (Discarding) von Datenpaketen erfolgen. Dies kann wiederum abhängig von dem signalisierten Indikator bzw. Status abhängig gesteuert werden. Vorteilhaft wird durch das Verwerfen von Datenpaketen bereits in dem aGW bereits die Last auf der Schnittstelle zwischen aGW und der Basisstation eNB verringert, d.h. die Basisstation eNB muss allgemein eine geringere Anzahl Datenpakete der Verbindung behandeln. Zudem wird die Stabilität der Verbindung selbst nicht beeinträchtigt, da beispielsweise die Nummerierung der Datenpakete erst in Verbindung mit der Komprimierung des Kopffeldes und der Verschlüsselung den Datenpaketen hinzugefügt wird und somit, bis auf gegebenenfalls weitere von der Basisstation eNB verworfene markierte Datenpakete, bis zum Empfang durch das Teilnehmerendgerät UE bestehen bleibt. Allerdings kann ein Verwerfen von Datenpaketen bereits in dem aGW gegebenenfalls nachteilig einer aktuellen Lastsituation entgegenwirken. Wie vorstehend beschrieben, existiert eine Verzögerung in der Größenordnung von RTT, bevor das Verwerfen in dem aGW Auswirkungen auf den Lastzustand in der Basisstation eNB hat. Innerhalb dieses Zeitraums kann sich jedoch die Lastsituation in der Basisstation eNB bereits derart verändert haben, beispielsweise durch kurzfristige Nutzung weiterer Übertragungsressourcen auf der Funkschnittstelle, dass ein Verwerfen von Datenpaketen nach dem dann aktuellen Lastzustand nicht mehr erforderlich wäre. In diesem Fall würden also Datenpakete von dem aGW verworfen werden, welche mit den zur Verfügung stehenden Ressourcen problemlos zu dem Teilnehmerendgerät UE übertragbar wären. Hierdurch kann beispielsweise die Dienstqualität (QoS - Quality of Service) der Verbindung gegebenenfalls nachteilig beeinträchtigt werden. Liegt die Entscheidung, ob ein Datenpaket verworfen wird oder nicht hingegen bei der Basisstation eNB, so kann diese unmittelbar, d.h. annähernd verzögerungsfrei abhängig von einer aktuellen Lastsituation darüber entscheiden, ob und welche Anzahl Datenpakete verworfen werden müssen, um eine Überlast des Pufferspeichers zu verhindern.

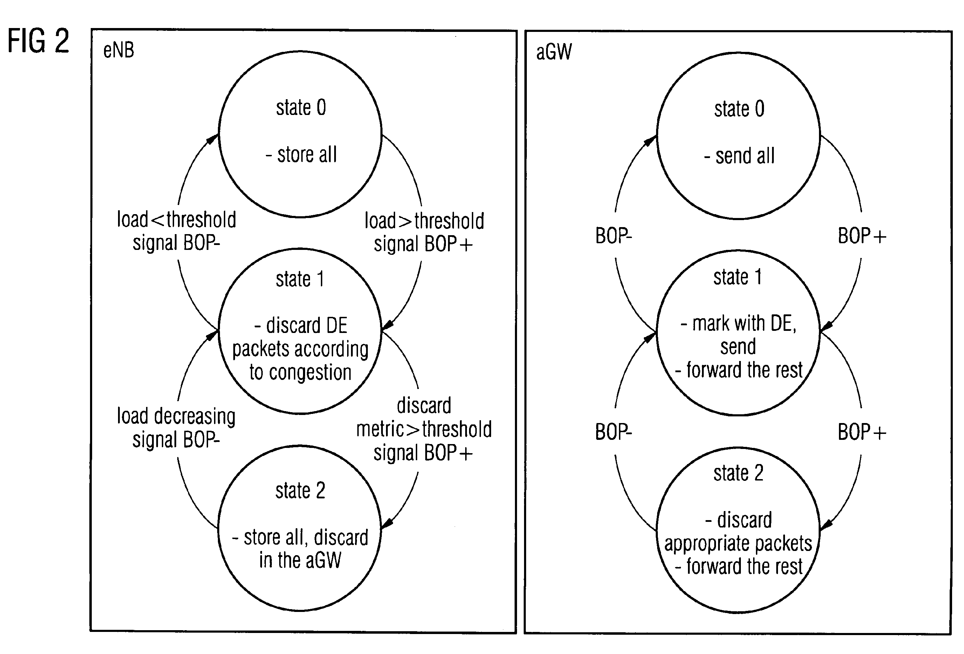

Unterhalb der Darstellung des aGW in der FIG 1 ist ein weiteres Ablaufdiagramm mit den einzelnen Schritten und Entscheidungen des ersten Schrittes 1 beispielhaft dargestellt. Dabei wird auch auf unterschiedliche Stati des aGW Bezug genommen, welche im Zusammenhang mit der FIG 2 noch näher erläutert werden.

Zunächst wird bei Empfang eines Datenpakets von dem IP-Netzwerk geprüft, ob sich der aGW in dem Status 0 (state 0) befindet. Ist dies der Fall (Yes), so wird das Datenpaket zur nachfolgenden Komprimierung des Kopffeldes und Verschlüsselung weitergeleitet. Ist das aGW hingegen nicht (No) in dem Status 0, so wird anschließend geprüft, ob es sich in dem Status 1 (s1, state 1) befindet. Ist dies nicht (No) der Fall, so befindet sich das aGW in einem Status 3, nach welchem bestimmte bzw. eine bestimmte Anzahl Datenpakete bereits in dem aGW verworfen werden (Discard packet). Befindet sich das aGW hingegen in dem Status 1 (s1, state 1), so wird nachfolgend geprüft, ob das Datenpaket nach Verschlüsselung (ciphering) und Komprimierung (compression) verwerfbar ist (OK). Ist das Datenpaket nicht (No) potenziell von der Basisstation eNB verwerfbar, da es beispielsweise für die Aufrechterhaltung der Verbindung von großer Bedeutung ist, so wird es ohne ergänzende Markierung zu der Basisstation eNB übertragen (Send packet). Ist es nach der Prüfung hingegen verwerfbar (Yes), so wird es nach Komprimierung des Kopffeldes sowie Verschlüsselung markiert (Label packet), d.h. das Statusbit hinzugefügt, und erst anschließend zu der Basisstation eNB übertragen (Send packet).

FIG 2 zeigt Diagramme für die Basisstation eNB und das aGW, in denen die einzelnen Statusübergänge sowie Stati beispielhaft dargestellt sind. Das linke Diagramm bezüglich der Basisstation eNB behandelt dabei die Bestimmung der Lastsituation sowie eine daraus abgeleitete Generierung von Signalisierungen, währenddessen das rechte Diagramm die Reaktionen des aGW auf diese Signalisierungen der Basisstation eNB aufzeigt. Zunächst sei angenommen, dass sich sowohl die Basisstation eNB als auch das aGW jeweils in dem Status 0 (state 0) befinden, d.h. die Basisstation eNB ist in der Lage, alle von dem aGW empfangenen Datenpakete in dem Pufferspeicher zu speichern (store all), ohne absehbar eine Überlast des Pufferspeichers hervorzurufen, und das aGW leitet alle von dem IP-Netzwerk empfangenen Datenpakete ohne erfindungsgemäße Behandlung zu der Basisstation eNB über das Transportnetzwerk TN weiter.

Ermittelt die Basisstation eNB nun, dass die aktuelle Last des Pufferspeichers einen Schwellwert übersteigt (load>threshold), so signalisiert sie dem aGW mittels eines Indikators (signal BOP+), beispielsweise ein Statusbit mit einem binären Wert 1, den Bedarf eines Statuswechsels sowohl der Basisstation eNB als des aGW in den Status 1 (state 1) angibt. Nach Empfang des Indikator (BOP+) wechselt das aGW entsprechend in den Status 1 (state 1) und beginnt mit dem Hinzufügen von Statusbits zu einer Anzahl von verwerfbaren Datenpaketen und einem Übertragen dieser markierten Datenpakete zu der Basisstation eNB (mark with DE, send) bzw. mit dem Übertragen der nicht verwerfbaren Datenpakete (forward the rest) entsprechend vorstehender Beschreibung zu FIG 1. Einen entsprechenden Statuswechsel in den Status 1 (state 1) führt auch die Basisstation eNB durch, wobei diese abhängig von der aktuellen oder erwarteten Überlast bzw. Blockierung mit dem Statusbit versehene Datenpakete verwirft (discard DE packets according to congestion).

Kann mittels dieser Mechanismen bereits erreicht werden, dass die Last des Pufferspeichers, nach beispielsweise einem bestimmten Zeitraum, wieder unter den Schwellwert fällt (load<threshold), so signalisiert die Basisstation eNB mittels des Indikators (signal BOP-), diesmal beispielsweise mittels des binären Wertes 0 des Statusbits, dem aGW, dass ein Statuswechsel zurück zu dem Ursprungsstatus Status 0 (state 0) erfolgen kann. Entsprechend führt nach Empfang und Auswertung der Signalisierung (BOP-) das aGW diesen Statuswechsel in den Status 0 (state 0) durch.

Liegt die Last des Pufferspeichers nach dem bestimmten Zeitraum hingegen weiterhin über dem Schwellwert (discard metric>threshold), so signalisiert die Basisstation eNB dem aGW abermals mittels des Indikators (signal BOP+), beispielsweise wiederum mittels des Statusbits mit einem binären Wert 1, dass ein weiterer Statuswechsel in den Status 2 (state 2) erforderlich ist. Nach Empfang dieses neuerlichen Indikators (BOP+) wechselt das aGW entsprechend in den Status 2 (state 2) und beginnt entsprechend vorstehender Beschreibung zu FIG 1 mit einer Verwerfung einer Anzahl von als verwerfbar identifizierter Datenpakete (discard appropriate packets, forward the rest) bereits vor einer Übertragung zu der Basisstation eNB sowie einer Weitergabe von Datenpaketen zu der Basisstation eNB, welche nicht für ein Verwerfen geeignet sind. Mittels dieser Maßnahme in dem aGW sollte die dann ebenfalls im Status 2 (state 2) befindliche Basisstation eNB dann wieder in der Lage sein, alle von dem aGW empfangenen Datenpakete zu speichern (store all, discarded in the aGW).

Kommt es in dieser Folge tendenziell oder real zu einer Absenkung der Last (load decreasing) in der Basisstation eNB auf ein Niveau, welches bereits durch Maßnahmen des Status 1 behandelt werden kann, so signalisiert die Basisstation eNB dem aGW mittels des Indikators (signal BOP-), beispielsweise wiederum mittels des Statusbits mit einem binären Wert 0, einen Statuswechsel von dem Status 2 (state 2) zurück zu dem Status 1 (state 1). Nach Empfang und Auswertung dieses Indikators (BOP-) wechselt das aGW entsprechend zurück in den Status 1 (state 1). Für einen nachfolgenden Statuswechsel zurück in den Status 0 siehe vorstehende Beschreibung.

Nach einer nicht dargestellten Alternative kann der Status 2 beispielsweise auch Maßnahmen des Status 1 beinhalten. Dies würde bedeuten, dass seitens des aGW nur eine bestimmte Anzahl der potenziell verwerfbaren Datenpakete bereits in dem aGW verworfen werden, wohingegen die verbleibende Anzahl potenziell verwerfbarer Datenpakete entsprechend dem Verfahren in dem Status 1 mit einem Statusbit zur Verwerfung durch die Basisstation eNB markiert werden. Auch die Basisstation eNB würde in dem Status 2 abhängig von der aktuellen Lastsituation ergänzende Datenpakete verwerfen. Vorteilhaft wird hierdurch sichergestellt, dass nur eine für die Verhinderung der Überlast des Pufferspeichers erforderliche Gesamtzahl Datenpakete verworfen wird. Der Wechsel des aGW von dem Status 1 in den Status 2 könnte dabei auch unabhängig von einer neuerlichen Signalisierung eines Indikators durch die Basisstation eNB erfolgen. Beispielsweise wird nach einem vorgegebenen Zeitintervall, in dem das aGW in dem Status 1 befindlich war, automatisch in den Status 2 gewechselt, welcher beispielsweise ebenfalls für einen bestimmten Zeitraum beibehalten wird, bevor wieder automatisch in den Status 1 zurückgewechselt wird. In diesem Fall würde die Basisstation eNB bei einem autonomen Wechsel des aGW in den Status 2 nicht ebenfalls in den Status 2 wechseln müssen, sondern könnte vielmehr weiter nach den Mechanismen des Status 1 verfahren. Eine Signalisierung eines Indikators (BOP-) würde das aGW, welches sich in dem Status 2 befindet, unmittelbar in den Ursprungsstatus 0 zurückwechseln lassen.

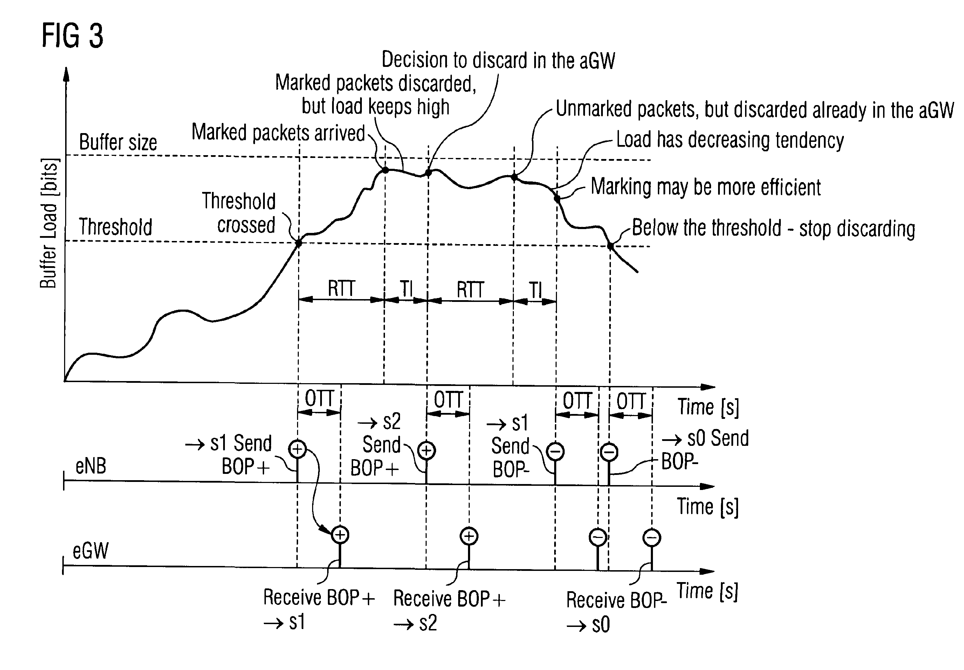

In der FIG 3 ist, Bezug nehmend auf vorstehende Erläuterungen zu den FIG 1 und FIG 2, ein beispielhaftes Zeitdiagramm dargestellt, welches die Abhängigkeiten und Auswirkungen der einzelnen Signalisierungen, Statuswechsel und damit zusammenhängender Verfahren verdeutlichen. Das Diagramm stellt die Last des Pufferspeichers (Buffer Load [bits]) der Basisstation eNB über der Zeit (Time [s]) mittels einer durchgehenden Linie dar. Ergänzend definiert eine erste waagerecht gestrichelte Linie eine Größe des Pufferspeichers (Buffer size) sowie eine dazu parallele zweite gestrichelte Linie einen vorgegebenen Schwellwert (Threshold). Weiterhin sind auf den unteren Zeitachsen die jeweilige Statusübergänge in der Basisstation eNB und in dem aGW ergänzend dargestellt.

Da sich die Last des Pufferspeichers zunächst unterhalb des Schwellwertes befindet, die Schwankungen der Last sind durch variable Übertragungen auf der Funkschnittstelle zu dem Teilnehmerendgerät UE bedingt, befinden sich sowohl die Basisstation eNB als auch das aGW in dem Status 0. Überschreitet nun, beispielsweise verursacht durch sich verschlechternde Übertragungseigenschaften der Funkschnittstelle, zu einem Zeitpunkt die Last des Pufferspeichers den vorgegebenen Schwellwert (Threshold crossed), so wechselt die Basisstation eNB in den Status 1 (-> s1) und signalisiert zu dem aGW einen Indikator zum Wechseln in den nächst höheren Status (Send BOP+). Nach einer einfachen Laufzeit OTT des Signals empfängt das aGW den Indikator (Receive BOP+) und wechselt ebenfalls in den Status 1 (-> s1) . Entsprechend vorstehender Beschreibung beginnt das aGW nach einem Wechsel in den Status 1 mit einem Markieren von verwerfbaren Datenpaketen vor einer Übertragung zu der Basisstation eNB. Diese markierten Datenpakete werden nach einer doppelten Laufzeit RTT (einschließlich einer Verarbeitungszeit in dem aGW) erstmals von der Basisstation eNB empfangen (Marked packets arrived), wobei während des Zeitraums RTT die Last des Pufferspeichers beispielhaft weiter ansteigt. Die Basisstation eNB beginnt nun, markierte Datenpakete zu verwerfen, um die Last des Pufferspeichers zu verringern.

Bleibt die Last des Pufferspeichers, wie dargestellt, trotz der Maßnahmen der Basisstation eNB während eines vorgegebenen Zeitintervalls TI (Time Interval) weiterhin über dem Schwellwert (Marked packets discarded, but load keeps high), so entscheidet die Basisstation eNB (Decision to discard in the aGW) in einem nächsten Schritt, einen weiteren Statuswechsel in den Status 2 (-> s2) zu vollziehen. Dies signalisiert die Basisstation eNB dem aGW wiederum mittels eines Indikators zum Wechseln in den nächst höheren Status (Send BOP+). Nach wiederum einer einfachen Laufzeit OTT wird dieser Indikator von dem aGW empfangen (Receive BOP+) und ausgewertet, und ein entsprechender Statuswechsel (-> s2) in den Status 2 vollzogen. Im Anschluss an den Wechsel in den Status 2 beginnt das aGW, eine Anzahl Datenpakete bereits vor der Weitergabe an die Basisstation zu verwerfen.

Dieses Verwerfen von Datenpaketen bereits in dem aGW und der damit einhergehende Empfang von nicht zum potenziellen Verwerfen markierten Datenpaketen wird für die Basisstation eNB nach der Laufzeit RTT spürbar (Unmarked packets, but discarded already in the aGW). In Folge des Verwerfens in dem aGW nimmt nach dem dargestellten Beispiel die Last des Pufferspeichers tendenziell ab (Load has decreasing tendency). Nachdem dies nach einem vorgegebenen Zeitintervall TI weiterhin der Fall ist, entscheidet die Basisstation eNB einen Wechsel zurück in den Status 1, dessen Maßnahmen nachfolgend eine größere Effizienz bei dem Verwerfen von Datenpaketen versprechen (Marking may be more efficient). Daraufhin führt die Basisstation eNB einen entsprechenden Statuswechsel (-> s1) zurück in den Status 1 durch und signalisiert dies mittels eines Indikators (Send BOP-) dem aGW. Nach der Laufzeit OTT, in welcher das aGW weiterhin Datenpakete verwirft, empfängt das aGW den Indikator und führt ebenfalls einen Statuswechsel zurück in den Status 1 durch.

Nach dem Beispiel der FIG 3 unterschreitet kurze Zeit nach Empfang des Indikators durch das aGW die Last des Pufferspeichers den Schwellwert (Below the threshold - stop discarding). Dieses Unterschreiten nimmt die Basisstation eNB zum Anlass, einen weiteren Statuswechsel zurück in den Status 0 durchzuführen (-> s0) und dies mittels eines Indikators zu dem aGW zu signalisieren (Send BOP-). Nach wiederum der Laufzeit OTT empfängt das aGW die Signalisierung (Receive BOP-) und führt in dessen Folge ebenfalls einen Statuswechsel zurück zu dem Status 0 durch (-> s0).

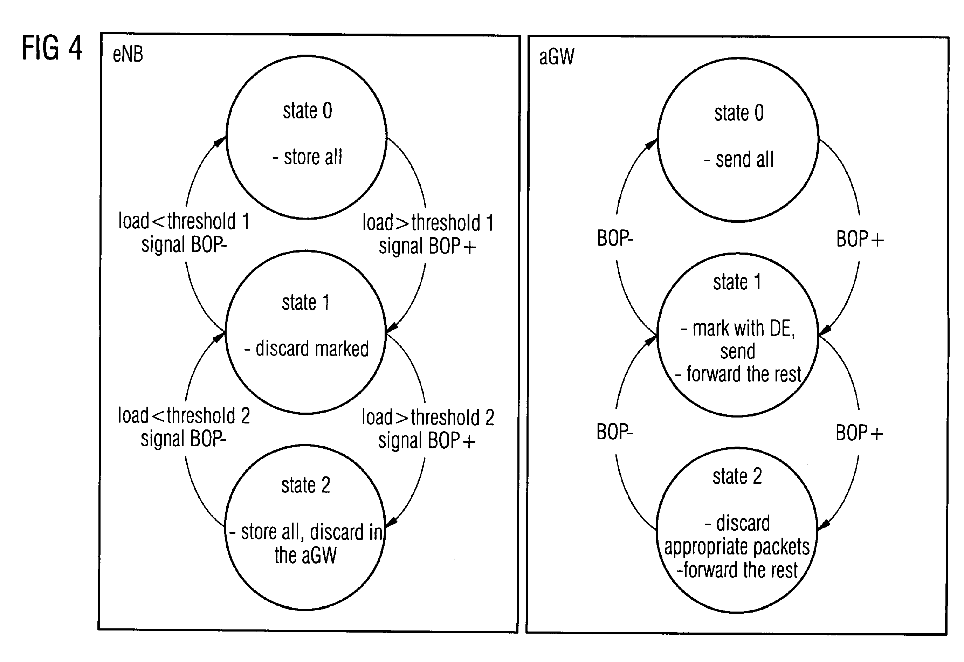

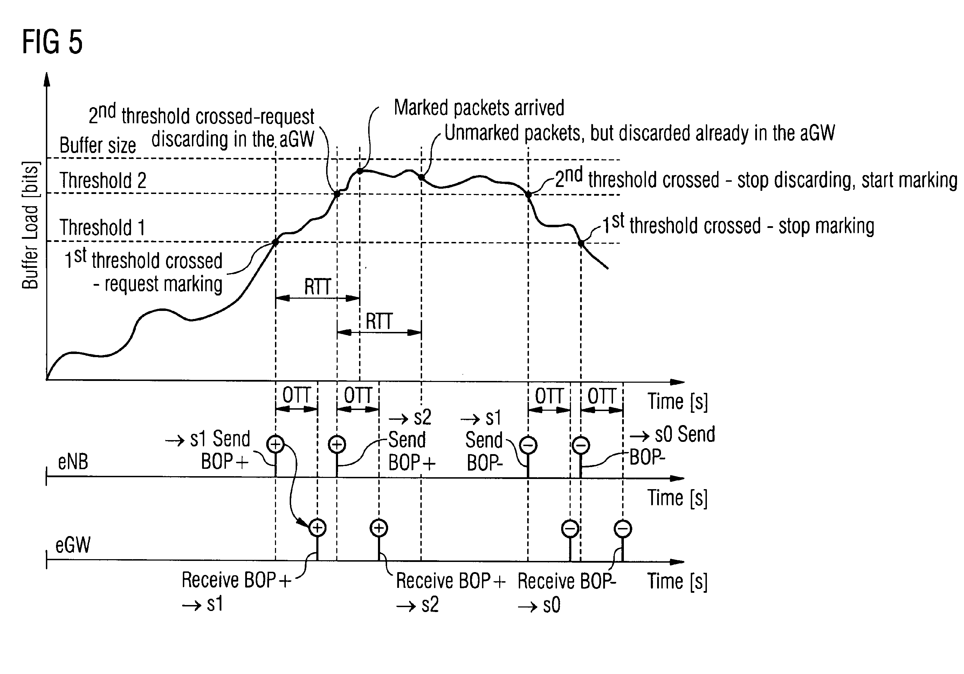

In den FIG 4 und 5 sind Abwandlungen der Beispiele der FIG 2 und 3 dargestellt. Im Unterschied zu der Definition eines einzigen Schwellwertes (Threshold) sowie eines Zeitintervalls (TI) in den FIG 2 und 3, von dessen Über- und Unterschreiten bzw. Status während oder nach dessen Ablauf ein Statuswechsel abhängig gemacht wurde, werden die Statuswechsel von zwei definierten Schwellwerten abhängig durchgeführt.

Während der Statusübergang in der FIG 4 von dem Status 0 zu dem Status 1 und zurück sowohl in der Basisstation eNB als auch in dem aGW mit dem Statusübergang in der FIG 2 identisch ist, d.h. nach einem Über- bzw. Unterschreiten eines ersten Schwellwertes erfolgt, wird nach der FIG 4 ein Statusübergang von dem Status 1 zu dem Status 2 in der Basisstation eNB erst nach Überschreiten eines zweiten Schwellwertes (load > threshold2) und von dem Status 2 zurück zu dem Status 1 erst nach Unterschreiten des zweiten Schwellwertes (load < threshold2) initiiert.

Die Konsequenzen dieses veränderten Statusübergangs sind beispielhaft in FIG 5 dargestellt. Der zweite beispielhafte Schwellwert (Threshold 2) ist als eine waagerecht gestrichelte Linie oberhalb der Linie des ersten Schwellwertes (Threshold 1) in der FIG 5 dargestellt. Ausgangssituation ist wiederum der Status 0 sowohl in der Basisstation eNB als auch in dem aGW.

Nachdem die bestimmte Last des Pufferspeichers der Basisstation eNB den ersten Schwellwert überschreitet (ist threshold crossed), führt die Basisstation eNB einen Statuswechsel in den Status 1 durch (-> s1) und signalisiert dies mittels eines Indikators dem aGW (Send BOP+). Nach der Laufzeit OTT empfängt das aGW die Signalisierung (Receive BOP+) und führt ebenfalls einen Statuswechsel in den Status 1 durch (-> s1). Noch bevor die Auswirkung des Statuswechsels, d.h. das Markieren von verwerfbaren Datenpaketen durch das aGW, nach einem Zeitraum RTT für die Basisstation eNB spürbar werden (marked packets arrived), überschreitet nach dem Beispiel der FIG 5 jedoch die Last bereits den zweiten Schwellwert (2nd threshold crossed). Dies veranlasst die Basisstation eNB dazu, eine Verwerfung von Datenpaketen bereits in dem aGW anzufordern (request discarding in the aGW). Dies erfolgt mittels eines Statuswechsels von dem bestehenden Status 1 in den Status 2 (-> s2) sowie einer Signalisierung zu dem aGW mittels eines Indikators (Send BOP+). Dieser empfängt nach der Laufzeit OTT die Signalisierung (Receive BOP+) und führt einen entsprechenden Statuswechsel in den Status 2 durch (-> s2). Infolge dieses Statuswechsels beginnt das aGW, Datenpakete bereits vor der Weitergabe an die Basisstation eNB zu verwerfen. Diese Maßnahme wird für die Basisstation eNB wiederum erst nach dem Zeitraum RTT spürbar, d.h. erst nach diesem Zeitraum empfängt die Basisstation eNB wieder unmarkierte Datenpakete von dem aGW (Unmarked packets, but discarded already in the aGW). Während dieses Zeitraums, d.h. bis zum Empfang der ersten nicht zum potenziellen Verwerfen markierten Datenpakete kann die Basisstation eNB gegebenenfalls bereits gespeicherte sowie noch eintreffende markierte Datenpakete entsprechend dem Status 1 selbst verwerfen, um die Last in dem Pufferspeicher zu verringern.

Nach dem Beispiel der FIG 5 wird insbesondere infolge des Verwerfens von Datenpaketen bereits in dem aGW die Last des Pufferspeichers verringert, bis sie nach einer unbestimmten Zeit den zweiten Schwellwert wieder unterschreitet (2nd threshold crossed). Dies führt zu einer Entscheidung in der Basisstation eNB, das Verwerfen in dem aGW wieder aufzuheben und von diesem Datenpakete wieder zum potenziellen Verwerfen durch die Basisstation eNB markieren zu lassen. Diese Entscheidung wird in der Basisstation eNB durch einen Statuswechsel von dem aktuellen Status 2 zurück in den Status 1 (-> s1) sowie einer entsprechenden Signalisierung eines Indikators zu dem aGW (Send BOP-) umgesetzt. Nach einer Laufzeit OTT wird diese Signalisierung von dem aGW empfangen und durch einen Statuswechsel zurück in den Status 1 auf in dem aGW umgesetzt.

Während der Laufzeit OTT bis zum Empfang der Signalisierung verwirft das aGW weiterhin Datenpakete, sodass es nach dem Beispiel der FIG 5 zu einer weiteren Verringerung der Last des Pufferspeichers kommt. Diese Last unterschreitet nach einer unbestimmten Zeit auch den ersten Schwellwert (ist threshold crossed), welches in der Basisstation eNB zu der Entscheidung führt, einen Statuswechsel zurück in den Status 0 durchzuführen mit einem entsprechenden Beenden des Markierens von potenziell verwerfbaren Datenpaketen durch das aGW (stop marking). Die Basisstation eNB setzt diese Entscheidung durch einen Statuswechsel in den Status 0 (-> s0) um und signalisiert diesen Statuswechsel mittels einer Indikators zu dem aGW (Send BOP-), welches nach Empfang der Signalisierung (Receive BOP-) und Auswertung ebenfalls einen Statuswechsel in den Status 0 durchführt (-> s0).

Neben einer Definition von zwei Schwellwerten nach dem Beispiel der FIG 4 und 5 kann auch eine größere Anzahl Schwellwerte definiert werden. Diese definieren bei einem jeweiligen Über- bzw. Unterschreiten beispielsweise ein Verhältnis von bereits in dem aGW verworfenen und zum potenziellen Verwerfen markierten Datenpaketen. Beispielsweise könnten bei einem Überschreiten eines ersten, unteren Schwellwertes zunächst 100% der potenziell verwerfbaren Datenpakete markiert werden, währenddessen bei einem Überschreiten eines zweiten Schwellwertes nur noch 80% markiert, die restlichen 20% hingegen bereits in dem aGW verworfen werden. Bei einem Überschreiten eines dritten Schwellwertes kann dieses Verhältnis dann zu 60%/40% verändert werden, usw.

Alle Schwellwerte können selbstverständlich auch mit einer Hysterese versehen werden, welche einen stetigen Statuswechsel für den Fall, dass die Last im Bereich eines Schwellwertes schwankt, vorteilhaft verhindern kann. Eine Dimensionierung einer derartigen Hysterese sowie die Festlegung der Schwellwerte selbst obliegt dem Kenntnisstand des einschlägigen Fachmanns, beispielsweise basierend auf statistischen Analysen des Verhaltens des Systems.

Eine Entscheidung über die Anzahl Datenpakete, welche bereits in dem aGW verworfen werden muss, um eine Überlast des Pufferspeichers in der Basisstation eNB zu verhindern, kann alternativ auch seitens des aGW selbst getroffen werden. Angenommen, die Basisstation eNB ist in dem Beispiel der FIG 1 in der Lage, nach bzw. während des Überschreitens des Schwellwertes, und beispielsweise in Kenntnis der Übertragungseigenschaften der Funkschnittstelle, zu ermitteln, mit welcher Datenrate Datenpakete zu dem Teilnehmerendgerät UE übertragen werden können. Diese ermittelte Datenrate kann dann von der Basisstation eNB zu dem aGW signalisiert werden, beispielsweise mittels einer Anzahl von Indikatoren für bestimmte diskrete Werte oder mittels eines absoluten Wertes. Basierend auf dieser Information über die unterstützte Datenrate der Verbindung und in Kenntnis der Datenrate der von dem IP-Netzwerk empfangenen Datenpakete der Verbindung berechnet das aGW, welche Anzahl Datenpakete verworfen werden muss bzw. mit welcher Datenrate Datenpakete zu der Basisstation eNB übertragen werden können, um die von der Basisstation eNB aktuell unterstützte Datenrate zu realisieren, ohne jedoch eine Überlast des Pufferspeichers zu verursachen und mit dem Ziel, die Last wieder unterhalb des Schwellwertes zu bringen.

Eine Berechnung der Datenrate auf der Schnittstelle (S1) zwischen dem aGW und der Basisstation eNB erfolgt beispielsweise nach der Formel:

$$TBR(n) = MBR(n) + MinBR = ABR(n-1),$$

mit
MinBR - einer minimalen Datenrate auf der Funkschnittstelle (Minimal Bit Rate), welche beispielsweise auf Basis von Statistiken über Übertragungseigenschaften ermittelt werden kann ABR - einer aktuell verfügbaren Datenrate auf der Funkschnittstelle (Available Bit Rate), wobei ABR $\geq$ MinBR ist TBR - Übertragungsdatenrate auf der Schnittstelle (S1) zwischen aGW und Basisstation eNB (Transmitted Bit Rate)
MBR - Rate, mit der Datenpakete von dem aGW markiert werden (Mark Bit Rate)
IBR - eingehende Datenrate seitens des IP-Netzwerkes (Incomming Bit Rate)
n - Anzahl Datenpakete

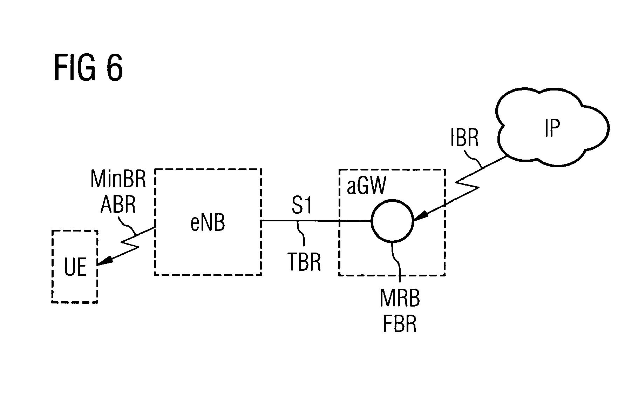

Diese Datenraten sind in der FIG 6 beispielhaft den Komponenten und Schnittstellen zugeordnet.

Für den Fall einer Blockierung sollte MBR wie folgt berechnet werden:

$$MBR(n) = ABR(n-1) - MinBR$$

Datenpakete werden also von dem aGW mit der Datenrate TBR zu der Basisstation eNB übertragen, darüber hinausgehende Datenpakete werden hingegen bereits in dem aGW verworfen. Ferner werden Datenpakete bis zur Datenrate ABR zum potenziellen Verwerfen markiert, sodass sie bei Bedarf zusätzlich von der Basisstation eNB verworfen werden können, beispielsweise wenn die aktuell verfügbare Datenrate auf der Funkschnittstelle ABR kleiner der zu dem aGW signalisierten Datenrate ist. Ergänzend kann das aGW, wenn es beispielsweise über einen bestimmten Zeitraum keine Angaben über die aktuell verfügbare Datenrate mehr von der Basisstation eNB empfangen hat, ein Ende der Überlast bzw. der Blockierung annehmen und ein autonomes Verwerfen von Datenpaketen in dem aGW sowie gegebenenfalls ergänzend das Markieren von potenziell verwerfbaren Datenpaketen beenden.

Die vorstehend beschriebene alternative Ausführung kann auch ohne die weiteren beschriebenen Merkmale der Erfindung realisiert werden, sodass sie nicht zwingend in Kombination mit diesen weiteren Merkmalen verstanden werden muss.

**Patentansprüche**

1. Verfahren zur Steuerung einer Übertragung von Datenpaketen in einem Funk-Kommunikationssystem, wobei das Funk-Kommunikationssystem zumindest einen zentralen Knoten (aGW) sowie zumindest eine mit diesem verbundene Basisstation (eNB) aufweist, und wobei die Basisstation (eNB) von dem zentralen Knoten (aGW) empfangene und von diesem mit einer Verschlüsselung versehene Datenpakete zu zumindest einem Teilnehmerendgerät (UE) über eine Funkschnittstelle (Radio Interface) überträgt, bei dem
die Basisstation (eNB) abhängig von einem aktuellen oder erwarteten Lastzustand eine erste Anzahl von Datenpaketen vor einer Übertragung über die Funkschnittstelle (Radio Interface) verwirft,
**dadurch gekennzeichnet, dass**
einer zweiten Anzahl der zu dem Teilnehmerendgerät (UE) zu übertragenden Datenpakete in dem zentralen Knoten (aGW) nach der Verschlüsselung eine jeweilige erste Information (DE) hinzugefügt wird, und die Basisstation (eNB) abhängig von der ersten Information (DE) ein jeweiliges Datenpaket verwirft oder nicht.

2. Verfahren nach Anspruch 1, bei dem
die Basisstation (eNB) dem zentralen Knoten (aGW) eine zweite Information (BOP) über den aktuellen oder erwarteten Lastzustand signalisiert.

3. Verfahren nach Anspruch 2, bei dem
der zentrale Knoten (aGW) abhängig von der zweiten Information (BOP) über den Lastzustand die ersten Informationen zu der zweiten Anzahl verschlüsselter Datenpakete hinzufügt.

4. Verfahren nach Anspruch 2 oder 3, bei dem
der zentrale Knoten (aGW) abhängig von der zweiten Information (BOP) über den Lastzustand eine dritte Anzahl der zu dem Teilnehmerendgerät (UE) zu übertragenden Datenpakete vor einer Weiterleitung zu der Basisstation (eNB) verwirft.

5. Verfahren nach Anspruch 4, bei dem
der zentrale Knoten (aGW) ein Verhältnis der dritten Anzahl zu der zweiten Anzahl Datenpakete abhängig von der zweiten Information (BOP) wählt.

6. Verfahren nach einem der vorstehenden Ansprüche, bei dem der aktuelle oder erwartete Lastzustand abhängig von einem Status eines Speichers (Buffer) zum Zwischenspeichern der verschlüsselten Datenpakete bestimmt wird.

7. Verfahren nach einem der vorstehenden Ansprüche, bei dem der zentrale Knoten (aGW) nur eine erste Information (DE) zu Datenpaketen hinzufügt, welche von der Basisstation (eNB) verworfen werden können.

8. Funk-Kommunikationssystem, aufweisend
zumindest einen zentralen Knoten (aGW) sowie zumindest eine mit diesem verbundene Basisstation (eNB), bei dem
der zumindest eine Knoten (aGW) Mittel zum Empfangen von Datenpaketen einer Verbindung zu zumindest einem Teilnehmerendgerät (UE), zum Verschlüsseln der Datenpakete und zum Übertragen der verschlüsselten Datenpakete zu der zumindest einen Basisstation (eNB) aufweist, und
die zumindest eine Basisstation (eNB) Mittel zum Empfangen der verschlüsselten Datenpakete, zum Verwerfen einer ersten Anzahl von Datenpaketen abhängig von einem aktuellen oder erwarteten Lastzustand und zum Übertragen der verschlüsselten Datenpakete zu dem zumindest einen Teilnehmerendgerät (UE) über eine Funkschnittstelle (Radio Interface),
**gekennzeichnet dadurch, dass**
der zumindest eine Knoten (aGW) ferner Mittel zum Hinzufügen einer jeweiligen ersten Information (DE) zu einer zweiten Anzahl der zu dem Teilnehmerendgerät (UE) zu übertragenden verschlüsselten Datenpakete, und
die Mittel zum Verwerfen in der zumindest einen Basisstation (eNB) derart ausgestaltet sind, dass ein jeweiliges Datenpaket abhängig von der ersten Information (DE) verworfen wird oder nicht.

9. Funk-Kommunikationssystem nach Anspruch 8, bei dem
die zumindest eine Basisstation (eNB) ferner Mittel aufweist zum Signalisieren einer zweiten Information (BOP) über den aktuellen oder erwarteten Lastzustand zu dem zumindest einen zentralen Knoten (aGW).

10. Knoten (aGW) eines Funk-Kommunikationssystems, aufweisend Mittel zum Empfangen von Datenpaketen einer Verbindung zu zumindest einem Teilnehmerendgerät (UE), zum Verschlüsseln der Datenpakete und zum Übertragen der verschlüsselten Datenpakete zu zumindest einer Basisstation (eNB) des Funk-Kommunikationssystems, **gekennzeichnet durch**
ferner Mittel zum Hinzufügen einer jeweiligen ersten Information zu einer zweiten Anzahl der zu dem Teilnehmerendgerät (UE) zu übertragenden verschlüsselten Datenpakete, wobei die zumindest eine Basisstation (eNB) mittels der ersten Information (DE) ein Verwerfen einer ersten Anzahl Datenpakete steuert.

11. Knoten (aGW) nach Anspruch 10, ferner aufweisend
Mittel zum Verwerfen einer dritten Anzahl von Datenpaketen in Abhängigkeit von einer von der zumindest einen Basisstation (eNB) empfangenen zweiten Information (BOP) über einen aktuellen oder erwarteten Lastzustand in der zumindest einen Basisstation (eNB).

12. Basisstation (eNB) eines Funk-Kommunikationssystems, aufweisend
Mittel zum Empfangen von verschlüsselten Datenpaketen einer Verbindung von einem zentralen Knoten (aGW) des Funk-Kommunikationssystems,
Mittel zum Auswerten einer seitens des zentralen Knotens (aGW) einer zweiten Anzahl von verschlüsselten Datenpaketen jeweils hinzugefügten ersten Information (DE),
Mittel zum Verwerfen einer ersten Anzahl verschlüsselter Datenpakete abhängig von der ersten Information, und
Mittel zum Übertragen der nicht verworfenen verschlüsselten Datenpakete zu zumindest einem Teilnehmerendgerät (UE) über eine Funkschnittstelle (Radio Interface).

13. Basisstation (eNB) nach Anspruch 12, ferner aufweisend Mittel (Buffer) zum Speichern von von dem zentralen Knoten (aGW) empfangenen verschlüsselten Datenpaketen.

FIG 1

FIG 2

# FIG 3

EP 1 892 886 A1

FIG 4

aGW

state 0
- send all

BOP+

BOP-

state 1
- mark with DE, send
- forward the rest

BOP+

BOP-

state 2
- discard appropriate packets
- forward the rest

eNB

state 0
- store all

load>threshold 1
signal BOP+

load<threshold 1
signal BOP-

state 1
- discard marked

load>threshold 2
signal BOP+

load<threshold 2
signal BOP-

state 2
- store all, discard in the aGW

# FIG 5

EP 1 892 886 A1

# FIG 6

**Europäisches Patentamt**

**EUROPÄISCHER RECHERCHENBERICHT**

Nummer der Anmeldung

EP 06 01 7580

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 03/049387 A (MOTOROLA INC [US]) 12. Juni 2003 (2003-06-12) * Zusammenfassung * * Seite 2, Zeile 27 - Seite 15, Zeile 10 * * Abbildungen * ----- | 1,2,4, 8-13 | INV. H04L12/28 |
| Y | EP 0 845 875 A2 (SKYDATA CORP [US]) 3. Juni 1998 (1998-06-03) * Zusammenfassung * * Spalte 3, Zeile 32 - Spalte 10, Zeile 41 * * Abbildungen * ----- | 1,2,4, 8-13 | |
| A | EP 1 585 265 A (MCI INC [US]) 12. Oktober 2005 (2005-10-12) * Zusammenfassung * * Absatz [0023] - Absatz [0025] * * Absatz [0110] - Absatz [0114] * * Absatz [0128] - Absatz [0132] * * Absatz [0146] - Absatz [0150] * * Absatz [0196] - Absatz [0215] * * Abbildungen * ----- | 1-13 | RECHERCHIERTE SACHGEBIETE (IPC) H04L H04Q |

Der vorliegende Recherchenbericht wurde für alle Patentansprüche erstellt

| Recherchenort | Abschlußdatum der Recherche | Prüfer |
|---|---|---|
| München | 16. Februar 2007 | AGUILAR CABARRUS, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 01 7580

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-02-2007

| Im Recherchenbericht angeführtes Patentdokument | | Datum der Veröffentlichung | Mitglied(er) der Patentfamilie | | Datum der Veröffentlichung |
|---|---|---|---|---|---|
| WO 03049387 | A | 12-06-2003 | AU | 2002340307 A1 | 17-06-2003 |
| | | | CN | 1596526 A | 16-03-2005 |
| | | | EP | 1454461 A1 | 08-09-2004 |
| | | | US | 2003103451 A1 | 05-06-2003 |
| EP 0845875 | A2 | 03-06-1998 | KEINE | | |
| EP 1585265 | A | 12-10-2005 | US | 2005220014 A1 | 06-10-2005 |

EPO FORM P0461

Für nähere Einzelheiten zu diesem Anhang : siehe Amtsblatt des Europäischen Patentamts, Nr.12/82